# EUROPÄISCHE PATENTANMELDUNG

(11) **EP 3 098 145 A1**
(43) Veröffentlichungstag der Anmeldung: **30.11.2016**
(21) Anmeldenummer: 16170502.5
(22) Anmeldetag: 19.05.2016
(51) Int. Cl.: B62J 6/20

(54) **LICHTREFLEKTIERENDER SPEICHEN-CLIP**

(30) Priorität: 26.05.2015 DE 202015102692 U
(71) Anmelder: Büchel GmbH & Co. Fahrzeugteilefabrik KG, 36039 Fulda (DE)
(72) Erfinder: BÜCHEL, Erhard, 36043 Fulda (DE)
(74) Vertreter: Puschmann Borchert Bardehle Patentanwälte Partnerschaft mbB

(57) **Zusammenfassung**

Die Erfindung betrifft einen lichtreflektierenden Speichen-Clip (10) zum Aufsetzen auf Fahrradspeichen (8), wobei der Speichen-Clip (10) einen Grundkörper (14) umfasst und an seiner Außenfläche mit einer lichtreflektierenden Schicht (18) versehen ist. Die Erfindung ist dadurch gekennzeichnet, dass der Grundkörper (14) eine farbige Oberfläche aufweist, und dass die lichtreflektierende Schicht (18) über der farbigen Oberfläche des Grundkörpers (14) angeordnet ist.

## Beschreibung

Die Erfindung betrifft einen lichtreflektierenden Speichen-Clip zum Aufsetzen auf Fahrradspeichen, wobei der Speichen-Clip einen Grundkörper umfasst und an seiner Außenfläche mit einer lichtreflektierenden Schicht versehen ist,
DE 20 2011 104 971 U1 zeigt ein Fahrrad-Laufrad mit einer Nabe, einer Felge und zwischen Nabe und Felge angeordneten Fahrradspeichen, an denen lichtreflektierende Clips der oben genannten Art aufgeclipt sind. Um die Erfordernisse nach Nummer 18 und 18a derer technischen Anforderungen an Fahrzeugteile bei der Bauartprüfung nach § 22a STVZO für retroreflektierende Einrichtungen zu erfüllen, wurden derartige Speichen-Clips mit einer weißen Oberfläche versehen, um die in den genannten Vorschriften geforderten Mindeststückstrahlwerte zu erreichen. Aus Gründen eines verbesserten Erscheinungsbildes ist es jedoch erwünscht, die Speichen-Clips auch farbig auszuführen und dennoch die oben genannten Bedingungen einzuhalten.

Der Erfindung liegt daher die Aufgabe zugrunde, einen lichtreflektierenden Speichen-Clip bereitzustellen, der bei Tageslicht farbig ist, dagegen weißes Licht reflektiert.

Dazu ist der erfindungsgemäße lichtreflektierende Speichen-Clip der eingangs genannten Art dadurch gekennzeichnet, dass der Grundkörper eine farbige Oberfläche aufweist, und dass die lichtreflektierende Schicht über der farbigen Oberfläche des Grundkörpers angeordnet ist. Es hat sich überraschend gezeigt, dass dieser Aufbau des Speichen-Clips dazu führt, dass die farbige Oberfläche des Speichen-Clips bei Tageslicht durch die nicht reflektierende Schicht durchscheint, während eine Reflexion von weißem Licht erfolgt, wenn der Speichen-Clip mit weißem Licht, beispielsweise durch Scheinwerfer, bestrahlt wird, wobei die Farbe der farbigen Oberfläche des Grundkörpers unterdrückt wird.

Eine vorteilhafte Ausgestaltung des erfindungsgemäßen lichtreflektierenden Speichen-Clips ist dadurch gekennzeichnet, dass die farbige Oberfläche des Grundkörpers durch eine Farbschicht gebildet ist. Dadurch wird in vorteilhafter Weise ermöglicht, die Farbschicht unabhängig von dem Material des Grundkörpers mit beliebigen Farben auszuwählen.

Eine weitere vorteilhafte Ausgestaltung des erfindungsgemäßen lichtreflektierenden Speichen-Clips ist dadurch gekennzeichnet, dass die lichtreflektierende Schicht eine Vielzahl von lichtreflektierenden Teilchen umfasst, die in eine Reflexionsschicht eingebettet sind. Dadurch wird in vertrauter Weise eine flächendeckende nicht reflektierende Schicht geschaffen, sodass die Farbe der Farbschicht des Grundkörpers optimal unterdrückt wird.

Eine vorteilhafte Ausgestaltung des erfindungsgemäßen lichtreflektierenden Speichen-Clips ist dadurch gekennzeichnet, dass die lichtreflektierenden Teilchen verspiegelte Kugelteilchen sind, wodurch die nicht reflektierende Eigenschaft der nicht reflektierenden Schicht in vorteilhafter Weise die oben genannten Vorschriften für Rückstrahler mehr als erfüllen kann.

Eine vorteilhafte Ausgestaltung des erfindungsgemäßen lichtreflektierenden Speichen-Clips ist dadurch gekennzeichnet, dass die lichtreflektierenden Teilchen verspiegelte Glaskugelteilchen sind. Obwohl auch andere Kugelteilchen aus durchsichtigem Material verwendet werden könnten, hat sich Glas als Material für die Kugelteilchen als besonders vorteilhaft erwiesen im Bezug auf die Fähigkeit der Lichtreflexion von weißem Licht.

Eine vorteilhafte Ausgestaltung des erfindungsgemäßen lichtreflektierenden Speichen-Clips ist dadurch gekennzeichnet, dass die lichtreflektierende Schicht eine transparente Trägerschicht aufweist, auf der die Reflexionsschicht angeordnet ist und dadurch ein schonender Übergang von der Reflexionsschicht zu dem Grundkörper ermöglicht wird, so das nun eventuell auftretende Verspannungen zwischen der Reflexionsschicht und dem Grundkörper minimiert werden können.

Ein Ausführungsbeispiel der Erfindung wird nun anhand der beiliegenden Zeichnungen beschrieben.
- Fig. 1: ist eine Seitenansicht eines Fahrrad-Laufrads mit lichtreflektierenden Clips.
- Fig. 2: ist eine schematische Darstellung des Schichtaufbaus des erfindungsgemäßen lichtreflektierenden Speichen-Clips.
- Fig. 3: ist eine Schnittdarstellung eines Beispiels für einen erfindungsgemäßen Speichen-Clip.

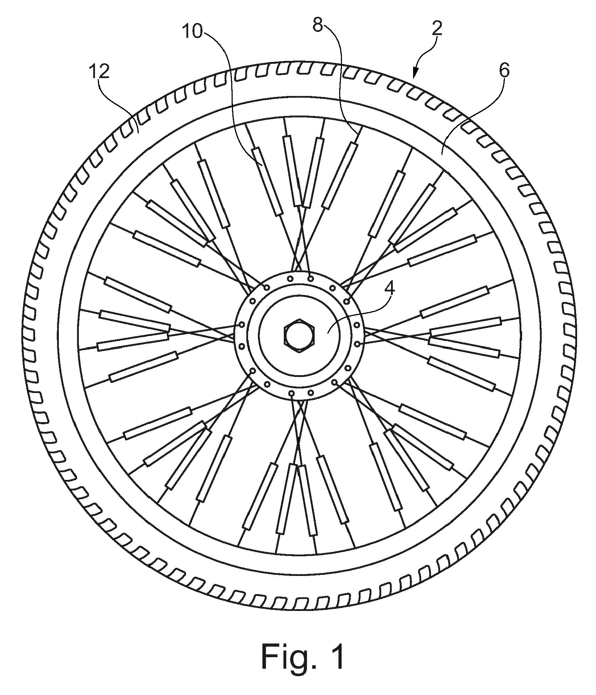

Fig. 1 zeigt ein Fahrrad-Laufrad 2 mit einer Nabe 4, einer Felge 6 und zwischen Nabe und Felge angeordneten Fahrradspeichen 8, an denen lichtreflektierende Speichen-Clips 10 angeordnet sind. Das Fahrrad-Laufrad 2 wird durch einen Reifen 12 komplettiert.

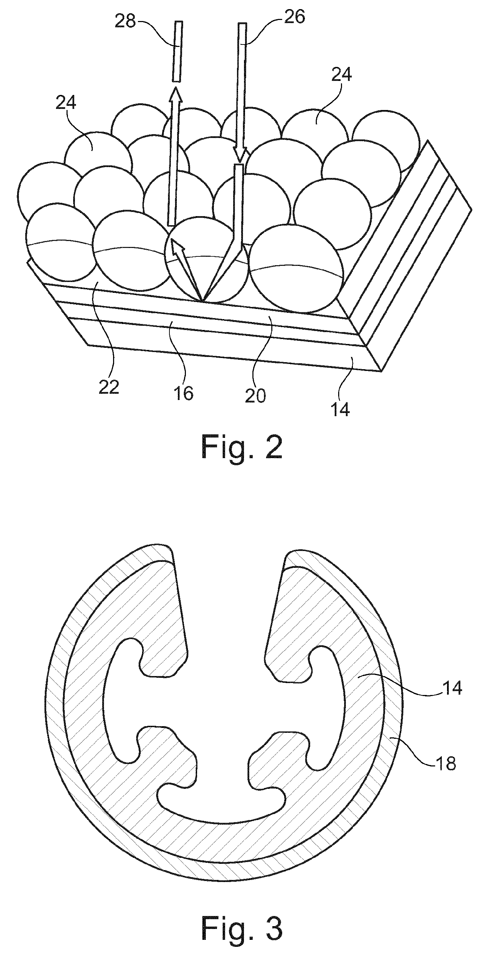

Fig. 2 zeigt eine schematische Darstellung des Schichtaufbaus des erfindungsgemäßen lichtreflektierenden Speichen-Clips 10, der einen Grundkörper 14 mit einer farbigen Oberflächenschicht 16 und einer lichtreflektierenden Schicht 18 aufweist, die über der farbigen Oberflächenschicht 16 des Grundkörpers 18 angeordnet ist. Die farbige Oberflächenschicht 16 des Grundkörpers 18 ist durch eine Farbschicht gebildet.

Die lichtreflektierende Schicht 18 weist eine transparente Trägerschicht 20 auf, auf der eine Reflexionsschicht 22 angeordnet ist. Die lichtreflektierende Schicht 18 umfasst eine Vielzahl von verspiegelten, lichtreflektierenden Kugelteilchen 24, die in die Reflexionsschicht 22 eingebettet sind. Die lichtreflektierenden Kugelteilchen 24 sind bei diesem Ausführungsbeispiel verspiegelte Glaskugelteilchen.

Die Figur 2 zeigt nicht den tatsächlichen Querschnitt des Speichen-Clips 10, sondern nur die Struktur der Schichten von dem Grundkörper 14 zu der lichtreflektierenden Schicht 18. Wie üblich, kann der tatsächliche Querschnitt des Speichen-Clips 10 zylindrisch sein und Mittel aufweisen, mit denen der Speichen-Clip 10 an der Fahrradspeiche 8 aufgeclipt werden kann.

Wie in Fig. 2 durch einen Pfeil 26 für das auf den Speichen-Clip 10 einfallende Licht und durch einen Pfeil 28 für das von dem Speichen-Clip 10 reflektierte Licht dargestellt ist, führt dieser Aufbau des Speichen-Clips 10 dazu, dass die Farbschicht 16 an der Oberfläche des Speichen-Clips 10 bei Tageslicht durch die lichtreflektierende Schicht 18 durchscheint, während eine Reflexion von weißem Licht erfolgt, wenn der Speichen-Clip 10 mit weißem Licht, beispielsweise durch Scheinwerfer, bestrahlt wird, wobei die Farbe der Farbschicht 16 des Grundkörpers 14 unterdrückt wird.

Fig. 3. zeigt den tatsächlichen Querschnitt eines Beispiels für einen erfindungsgemäßen Speichen-Clip 10. Der Grundkörper 14 ist dabei mit seinem Innenprofil so gestaltet, dass der Speichen-Clip 10 auf eine Fahrradspeiche 8 aufgeclipt werden kann. Das Bezugszeichen 18 bezeichnet die lichtreflektierende Schicht, die nach Fig. 2 die Trägerschicht 20, Reflexionsschicht 22 und die Glaskugelteilchen 24 umfasst.

### Bezugszeichenliste

- 2: Laufrad
- 4: Nabe
- 6: Felge
- 8: Speiche
- 10: Speichen-Clip
- 12: Reifen
- 14: Grundkörper
- 16: Farbschicht
- 18: Lichtreflektierende Schicht
- 20: Trägerschicht
- 22: Reflexionsschicht
- 24: Glaskugelteilchen
- 26: Pfeil einfallendes licht
- 28: Pfeil reflektiertes Licht

## Patentansprüche

1. Lichtreflektierender Speichen-Clip (10) zum Aufsetzen auf Fahrradspeichen (8), wobei der Speichen-Clip (10) einen Grundkörper (14) umfasst und an seiner Außenfläche mit einer lichtreflektierenden Schicht (18) versehen ist, **dadurch gekennzeichnet, dass** der Grundkörper (14) eine farbige Oberfläche aufweist, und dass die lichtreflektierende Schicht (18) über der farbigen Oberfläche des Grundkörpers (18) angeordnet ist.

2. Lichtreflektierender Speichen-Clip (10) nach Anspruch 1, **dadurch gekennzeichnet, dass** die farbige Oberfläche des Grundkörpers (14) durch eine Farbschicht (16) gebildet ist.

3. Lichtreflektierender Speichen-Clip (10) nach Anspruch 1 oder 2, **dadurch gekennzeichnet, dass** die lichtreflektierende Schicht (18) eine Vielzahl von lichtreflektierenden Teilchen (24) umfasst, die in einer Reflexionsschicht (22) eingebettet sind.

4. Lichtreflektierender Speichen-Clip (10) nach Anspruch 3, **dadurch gekennzeichnet, dass** die lichtreflektierenden Teilchen (24) verspiegelte Kugelteilchen sind.

5. Lichtreflektierender Speichen-Clip (10) nach Anspruch 3 oder 4, **dadurch gekennzeichnet, dass** die lichtreflektierenden Teilchen (24) verspiegelte Glaskugelteilchen sind.

6. Lichtreflektierender Speichen-Clip (10) nach Anspruch 1, **dadurch gekennzeichnet, dass** die lichtreflektierende Schicht (18) eine transparente Trägerschicht (20) aufweist, auf der die Reflexionsschicht (22) angeordnet ist.
